Europäisches Patentamt

European Patent Office

Office européen des brevets

(19)

(11) Publication number: **0 209 233 B1**

# (12) EUROPEAN PATENT SPECIFICATION

(45) Date of publication of the patent specification:
25.04.90

(21) Application number: 86304199.2

(22) Date of filing: 03.06.86

(51) Int. Cl.⁴: **C10G 45/64, B01J 29/38**

(54) Method for reactivation of zeolite dewaxing catalysts.

(30) Priority: 11.06.85 US 743463

(43) Date of publication of application:
21.01.87 Bulletin 87/4

(45) Publication of the grant of the patent:
25.04.90 Bulletin 90/17

(84) Designated Contracting States:
BE DE FR GB IT NL SE

(56) References cited:
EP-A- 0 009 894
US-A- 4 443 327

(73) Proprietor: MOBIL OIL CORPORATION, 150 East 42nd
Street, New York New York 10017(US)

(72) Inventor: Degnan, Thomas Francis, Jr., 40 N. Homestead
Drive, Yardley Pennsylvania 19067(US)
Inventor: Landolt, George Robert, 108 Tweed Avenue,
Audubon New Jersey 08106(US)

(74) Representative: Cooper, John Anthony et al, Mobil
Court 3 Clements Inn, London WC2A 2EB(GB)

Description

This invention relates to a process for reactivating dewaxing catalysts comprising a noble metal and a zeolite material, which have been deactivated by carbonaceous buildup or poisoning. Catalysts which may be regenerated by the process of the invention include those that have become deactivated during hydrocarbon hydroprocessing, such as catalytic dewaxing of hydrocarbon feedstocks.

In recent years techniques have become available for catalytic dewaxing of petroleum stocks. A process of that nature developed by British Petroleum is described in Oil and Gas Journal dated January 6, 1975, at pages 69-73, and U.S. Patent 3,668,11.

U.S. Patent Re. 28,398 describes a process for catalytic dewaxing with a catalyst comprising zeolite ZSM-5. Such a process combined with catalytic hydrofinishing is described in U.S. Patent 3, 894,938. U.S. Patent 4,137,148 describes a process for preparing specialty oils of very low pour point and excellent stability from a waxy crude oil distillate fraction by solvent refining, catalytic dewaxing over a zeolite catalyst such as a ZSM-5 catalyst and hydrotreating, under specified conditions.

Hydrocarbon lubricating oils have been obtained by a variety of processes in which high boiling fractions are contacted with hydrogen in the presence of hydrogenation/dehydrogenation catalysts at elevated temperatures and pressures. One such process is described in U.S. Patent 3,755,145 relating to catalytic lube dewaxing using a shape-selective zeolite catalyst, a large pore cracking catalyst such as clay or silica, and a hydrogenation/dehydrogenation catalyst. In U.S. Patent 4,181,598 a lube base stock oil of high stability is produced from a waxy crude oil fraction by solvent refining, catalytic dewaxing over a shape-selective zeolite catalyst and hydrotreating under specified conditions. Group VIII metals such as Ni, Pt and Pd are known as useful hydrogenation components in zeolitic catalytic dewaxing catalysts. Generally Ni has been preferred owing to its lower cost.

As a catalytic dewaxing catalyst is used, carbonaceous deposits form on it resulting in a reduction of catalytic activity. Various methods of regenerating Group VIII metal-containing catalysts are known. Such processes include oxidation, reduction and halogenation treatments. The present invention relates to a non-oxidative method of regenerating a zeolitic dewaxing catalyst which comprises an elevated temperature hydrogen treatment step.

U.S. Patent 3 210 265 teaches high temperature hydrogen regeneration of a hydrocracking catalyst comprising a hydrogenation component, for example Group VIII materials combined with an acidic cracking component such as a crystalline aluminosilicate. Although Group VIII metals are taught as hydrogenation components no advantage is taught in using noble metals over Group VIII base metals such as nickel and cobalt. Hydrogen regeneration of zeolite catalysts of 0.43 weight % Pt, 2 weight % Pt and 7.6 weight % Ni at high pressures are exemplified.

U.S. Patent 4 358 395 describes zeolite catalyst regeneration in which a zeolite catalyst is contacted with oxygen, precoked under controlled conditions and then contacted with hydrogen gas under controlled conditions. This process has the drawback of requiring a precoking step.

It has now been found that metal-containing shape-selective zeolite dewaxing catalysts, such as ZSM-5 catalysts, not only accumulate less coke during dewaxing but are more easily regenerated at pressures less than about 6996 kPa (1000 psig) when the hydrogenation metal is a noble metal, for example Pt or Pd, especially Pd.

According to the invention, there is provided a method for hydrogen reactivating a coked dewaxing catalyst comprising a noble metal, an inorganic oxide binder and a zeolite component having a constraint index of 1 to 12 and a silica to alumina molar ratio of at least 12, which method comprises contacting the coked dewaxing catalyst with hydrogen at a hydrogen pressure less than 7000 kPa and at a temperature of 315° to 538°C.

Catalyst regeneration employing hydrogen may be conducted either in situ within a reactor or outside of the reactor. Offsite regeneration may comprise contacting a thin layer of catalyst on a moving belt with hydrogen. Offsite regeneration is often desirable because it allows regeneration at high temperature without danger of temperature runaway in the reactor. Also, impurities are removed from the catalyst layer without having to contact other catalyst downstream in the same layer, as is the case for in situ regeneration.

Hydrogen reactivation has been found to be particularly effective in reactivating deactivated hydrocarbon conversion catalysts. This reactivation process can readily restore deactivated acid sites on aged catalysts as well as restoring their diffusion and sorption properties. Because hydrogen reactivation is considerably faster than oxidation procedures, the former is particularly desirable in processes such as catalytic lube dewaxing which generally require a frequent catalyst reactivation. Because much of the catalyst deactivation is attributable to the buildup of carbonaceous residue such as coke on the catalyst, it is imperative that at least some of the coke be removed therefrom. Preferably, a reactivated catalyst should contain no more than about 10, 5, 2, or preferably about 1 weight percent of carbonaceous deposits after reactivation. However, it has been found that conventional dewaxing catalysts such as NiZSM-5 require very high temperatures during hydrogen reactivation, for example greater than 540°C, or inordinately long regeneration periods, or both to reduce coke content to an acceptable level. Because exposure of the dewaxing catalyst to inordinately high temperature can cause structural damage to the catalyst, as well as hydrogenation component agglomeration, methods other than hydrogen reactivation have frequently been employed to reactivate zeolitic dewaxing catalysts.

In the process of the invention, the catalyst to be reactivated comprises a noble metal, an inorganic oxide binder and a zeolite component having a constraint index from 1 to 12 and a silica-to-alumina molar ratio of at least 12. The coked dewaxing catalyst is reactivated by contact with hydrogen at a hydrogen pressure less than about 7000 kPa. The noble metal may be selected from platinum, palladium, iridium, ruthenium, rhodium, and osmium, and is preferably platinum, palladium or a mixture of the two. Use of the noble metal increases the extent of coke removal from the catalyst and permits hydrogen reactivation to proceed at lower temperatures than required for reactivating conventional nickel-containing catalysts. The hydrogen reactivation is carried out at a temperature of 315 to 538°C.

When palladium is employed, the maximum rate of coke removal may be obtained at temperatures less than 500°C, for example, between about 315 to 482°C. Accordingly, the present invention permits optimal rates of coke removal at lower temperatures, for example about 100°C lower than with an equivalent nickel-containing zeolitic catalyst.

In another of its aspects, the invention provides a method for catalytic dewaxing of a hydrocarbon feedstock containing straight chain paraffins. The feedstock may be contacted under dewaxing conditions with a catalyst comprising less than about 10, 5, 2, or even 1 weight percent noble metal, an inorganic oxide binder and a zeolite having a constraint index from 1 and 12 and a silica-to-alumina molar ratio of at least 12. A dewaxed effluent product stream is thus produced comprising greater than about 80, 85 or even 90 volume percent of hydrocarbons having a boiling point greater than about 200, 230, or even 315°C at atmospheric pressure. The dewaxing results in coking of the catalyst which may be reactivated by contact with hydrogen gas at temperatures from 315 to 482°C or even 538°C and pressures from 790 to 7000 kPa. Such contact is preferably maintained for a time sufficient to substantially restore the activity of the dewaxing catalyst.

The reactivation procedure of the present invention utilizes hydrogen, which may be mixed with an inert gas, such as nitrogen, carbon monoxide or carbon dioxide, for example from fuel processing streams located in a typical refinery. Regeneration of the coked catalyst material is achieved by contacting it with hydrogen under suitable reactivation conditions. These include temperatures ranging from 315 to 538°C, preferably 315 to 482° and most preferably 371 to 454°C, and contact times ranging from 1 to 48 hours, preferably 5 to 24 hours, such that the catalyst coke content is reduced to less than 10, 5, 2 or even 1 weight percent of the catalyst. The hydrogen treatment step is carried out at pressures of less than 7000 kPa, for example 790 to 7000, preferably 2170 to 3550 kPa and most preferably 2510 to 3100 kPa. The hydrogen feed rate may be from 0.2 to 400 standard liters per hour per gram of catalyst, preferably 2 to 50 standard liters per hour per gram of catalyst. Hydrogen may be taken from any hydrogen stream in a refinery, such as recycle streams or streams from a steam reformer. Typically, the refinery streams will have a hydrogen concentration of greater than 50 volume percent, with the remainder being inert gas. Preferably, the reactivating agent forms a stream containing greater than 70 volume percent hydrogen ($H_2$), with the remainder being inert gas.

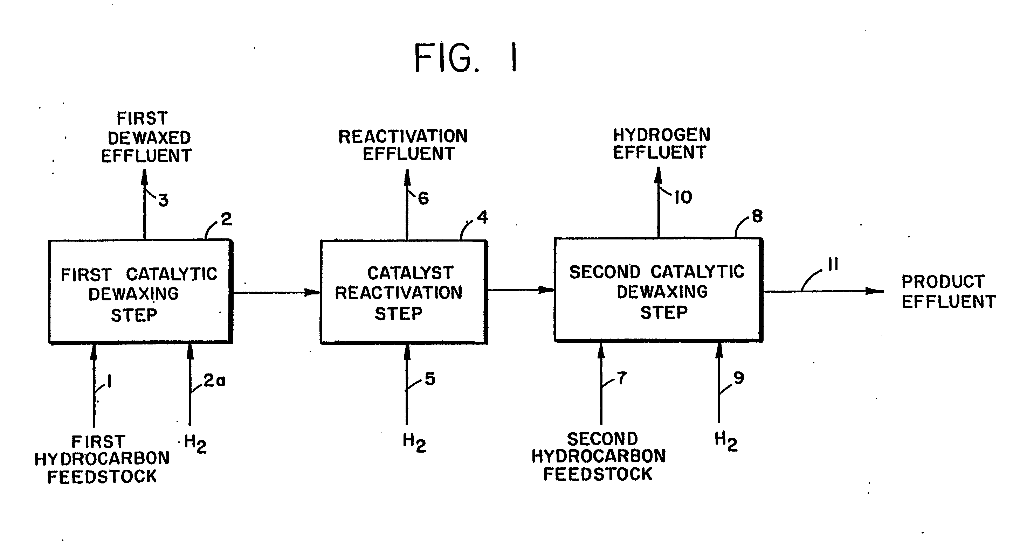

The noble metal-containing catalyst is preferably incorporated into a cyclic dewaxing regeneration process, as shown in Figure 1 of the accompanying drawings. The dewaxing conditions may include a temperature from 232 to 454°C, a pressure of 790 to 7000 kPa, and a space velocity from 0.1 to 20 LHSV. The hydrogen feed rate generally ranges from $3 \times 10^5$ to $3 \times 10^6$ liters per liter. For lube dewaxing, conditions may include a temperature from 249 to 399°C, a pressure from about 790 to 7000 kPa, a space velocity from 0.2 to 5 LHSV, and a hydrogen feed rate from $3 \times 10^5$ to $3 \times 10^6$ liters per liter. Lube dewaxing conditions are described in greater detail in U.S. Patent 4 181 598. For distillate dewaxing, conditions may include temperatures from 288 to 468°C, pressures of 790 to 7000 kPa, a space velocity of 0.1 to 20 LHSV and a hydrogen feed rate from $3 \times 10^5$ to $3 \times 10^6$ liters per liter. Preferably, the temperatures range from 315 to 427°C, pressures range from 1477 to 4230 kPa, space velocities from 0.25 to 4.0 LHSV and hydrogen feed rates from $3 \times 10^5$ to $3 \times 10^6$ liters per liter. U.S. Patent 4 419 220 gives further details of distillate dewaxing.

The process of the invention is particularly suited to dewaxing hydrocarbon feedstocks containing straight chain paraffins to form an effluent stream containing greater than 80 volume percent of product having a boiling point at atmospheric pressure greater than 200°C, preferably above 230°C or even 315°C. Such product is particularly useful as lube base stock.

Prior to dewaxing, a preliminary hydrotreating step to remove nitrogen and sulfur and to saturate aromatics to naphthenes without substantial boiling range conversion will usually improve catalyst performance and permit lower temperatures, higher space velocities, lower pressures, or combinations of these conditions, may be employed. However, care should be taken to remove the lighter products including hydrogen sulfide and ammonia prior to dewaxing in order to avoid poisoning of the dewaxing catalyst.

With reference to Figure 1 of the drawings, the dewaxing and regeneration process includes catalytically dewaxing a first stream of hydrocarbon feedstock 1 comprising waxy components in a first catalyst dewaxing step 2, by contact with a stream of hydrogen 2a in the presence of the catalyst under the dewaxing conditions described above to produce a first dewaxed effluent stream 3 having a desired pour point. Preferably, the pour point is less than 0°C for lubes and -17°C for distillates. The dewaxing may continue until the catalyst is substantially deactivated. Deactivation is indicated when the catalyst cannot produce an effluent having the desired pour point under the above conditions.

The deactivated catalyst is then non-oxidatively regenerated by catalyst reduction step 4, in which a hydrogen-containing stream 5 contacts the catalyst and thereafter emerges as effluent stream 6, at suitable conditions as described above.

The regenerated catalyst may then be employed for catalytically dewaxing a second stream of the waxy hydrocarbon feedstock 7 in a second catalytic dewaxing step 8, by contact with the regenerated catalyst under the dewaxing conditions of step 2. Hydrogen may be provided by a hydrogen stream 9 which thereafter emerges as effluent 10, while the dewaxed product exits as product effluent 11.

The dewaxing catalyst used in the method of the invention may be used to dewax a variety of feedstocks ranging from relatively light distillate fractions up to high boiling stocks, such as whole crude petroleum, reduced crudes, vacuum tower residua, cycle oils, FCC tower bottoms, gas oils, vacuum gas oils, deasphalted residua and other heavy oils. The feedstock will normally be a $C_{10}^+$ feedstock, since lighter oils will usually be free of significant quantities of waxy components. The process is particularly useful with waxy distillate stocks, such as gas oils, kerosenes, jet fuels, lubricating oil stocks, heating oils and other distillate fractions whose pour point, freeze point, and cloud point need to be reduced to certain specification levels. Lubricating oil stocks will generally boil above 230°C, more usually above 315°C. Hydrotreated stocks are a convenient source of these materials as well as other distillate fractions since they normally contain significant amounts of waxy n-paraffins which have been produced by the removal of polycyclic aromatics.

The catalyst used in the process comprises a crystalline zeolite material which may be shape-selective. Zeolitic materials, both natural and synthetic, have been demonstrated in the past to have catalytic properties for various types of hydrocarbon conversion. Certain zeolitic materials include ordered, porous crystalline metallosilicates or metallogermanates having a definite crystalline structure as determined by X-ray diffraction, within which there are a large number of small cavities which may be interconnected by a number of still smaller channels or pores. These cavities and pores are uniform in size within a specific zeolitic material. Since the dimensions of these pores are such as to accept for adsorption molecules of certain dimensions while rejecting those of larger dimensions, these materials have come to be known as "molecular sieves" and are utilized in a variety of ways to take advantage of these properties.

Preferred crystalline zeolite materials for use in the catalysts used in the method of the invention are those having the structures of zeolite beta, ZSM-5, ZSM-5/ZSM-11 intermediate, ZSM-11, ZSM-12, ZSM-23, ZSM-35, ZSM-38, and ZSM-48, which are described in U.S. Patents 3,308,069 (zeolite beta), 3,702,886 (ZSM-5), 4,229,424 (ZSM-5/ZSM-11), 3,709,979 (ZSM-11), 3,832,449 (ZSM-12), 4,076,842 (ZSM-23), 4,016,245 (ZSM-11), 4,046,859 (ZSM-38), and 4,375,573 (ZSM-48).

The zeolitic dewaxing catalysts comprise also a hydrogenation/dehydrogenation component. The hydrogenation/dehydrogenation component is a noble metal such as platinum or palladium, preferably palladium.

The metal may be incorporated into the catalyst by any suitable method, such as impregnation or exchange onto the zeolite resulting in intimate association of noble metal with the zeolite. Alternatively, the catalyst may be prepared by physically mixing the metal salt with the zeolite and an inorganic matrix component. The noble metal need not be directly associated with the zeolite component of the catalyst. The metal may be incorporated into the catalyst in the form of a cationic, anionic or neutral complex, such as $Pd(NH_3)_4^{2+}$.

The amount of the noble metal component is suitably less than 2 weight percent, preferably 0.1 to 0.9 weight percent, for example 0.3 to 0.6 weight percent of the total catalyst.

It may be desirable to incorporate within the catalyst a non-zeolitic inorganic oxide binder material resistant to the temperature and other conditions employed in the process. Such matrix materials include both synthetic and natural substances as well as inorganic materials, such as clays, silica and/or metal oxides. The latter may be either naturally occurring or in the form of gelatinous precipitates. Naturally occurring clays which can be composited with the catalyst include those of the montmorillonite and kaolin families. These clays can be used in the raw state as originally mined or initially subjected to calcination, acid treatment or chemical modification.

The catalyst may be composited with a porous matrix material, such as alumina, silica-alumina, silica-magnesia, silica-zirconia, silica-thoria, silica-beryllia, silica-titania, as well as ternary compositions, such as silica-alumina-thoria, silica-alumina-zirconia, silica-alumina-magnesia, and silica-magnesia-zirconia. The matrix may be in the form of a co-gel with the zeolite. The relative proportions of zeolite component and inorganic oxide gel matrix may vary widely, with the zeolite content ranging from between 1 to 99 weight percent, more usually 5 to 80 weight percent of the composite, say about 70 weight percent zeolite and 30 weight percent alumina. The matrix may itself possess catalytic properties, generally of an acidic nature.

The following Examples illustrate the invention.

EXAMPLES 1 to 3

HZSM-5, NiZSM-5 and PdZSM-5 dewaxing catalysts having the characteristics set out in Table 1 were employed in dewaxing. The HZSM-5 and NiZSM-5 catalysts were steamed to reduce their alpha activities to about 70 as measured by the alpha test set out in U.S. Patent 4,326,994. All three catalysts were employed in dewaxing heavy neutral or bright stock feeds for at least 30 days.

EXAMPLES 4 to 6: Hydrogenation Reactivation of Coked Dewaxing Catalysts of Example 1 to 3

The deactivated catalysts of Examples 1 to 3 were each hydrogen reactivated at 482°C for 24 hours in 4.7 liters of hydrogen per gram of catalyst per hour, once through hydrogen at 2860 kPa. Table 2 compares the residual organic contents and elemental compositions of organic material remaining on the various lube dewaxing catalysts. The amount of organic material remaining on the PdZSM-5 catalyst of Example 3 was considerably less than that on either the conventional NiZSM-5 catalyst of Example 2 or the HZSM-5 catalyst of Example 1.

EXAMPLES 7 to 9: Preparation of PdZSM-5, PtZSM-5 and NiZSM-5 Catalysts

The Pd catalyst was prepared by physically mixing 0.37 weight % Pd as an aqueous $Pd(NH_3)_4Cl_2$ solution with 65% ZSM-5 and 35% $Al_2O_3$, extruding to 1.6 mm diameter by 6.3 mm long extrudates, drying at 110°C, and then calcining in nitrogen to decompose the organic directing agent, exchanging with an ammonium salt ($NH_4NO_3$), and then calcining in air to 538°C. The Pt-containing catalyst was prepared identically but using $Pt(NH_3)_4Cl_2$ as the metal salt. The Ni catalyst was prepared by extruding the 65% ZSM-5/35% $Al_2O_3$ mixture to 1.6 mm by 6.3 mm extrudates, drying at 100°C, calcining in nitrogen to 538°C, exchanging with the ammonium salt, rinsing with deionized water, exchanging with 0.5 M $Ni(NO_3)_2$ for 4 hours at 82°C and calcining in air to 538°C for three hours. The Ni catalyst used in this example was unsteamed (alpha = 170).

EXAMPLE 10: Hydrogen Reactivation of Coked Catalysts of Examples 7 to 9

The coked catalysts of Examples 7 to 9 were deoiled at 482°C in helium and then analyzed for coke (ignited basis) by thermogravimetric analysis (TGA). As shown in Table 3, the amount of neutral stock desorbed from the catalyst during heat-up in helium is 34 to 37 weight percent. Approximately the same amount of coke, that is material remaining immediately after the catalyst has been heated to 482°C, is deposited on the platinum and palladium catalysts, 7.2 and 7.5 weight percent, respectively, compared to the 10.3 weight percent deposited on the Ni catalyst. Thus, there is approximately 30% less coke make on the noble metal-containing catalysts.

## TABLE 1

| Catalyst Type | 65% HZSM-5 35% Al₂O₃ | 65% NiZSM-5 35% Al₂O₃ | 65% PdZSM-5 35% Al₂O₃ |
|---|---|---|---|
| Extrudate Size, (mm) | 1.6 | 1.6 | 1.6 |
| Nickel, wt% | --- | 1.2 | --- |
| Palladium, wt% | --- | --- | 0.6 |
| Alpha Activity | 68 | 68 | about 170 |
| Density, g/cc | | | |
|   Packed | (0.59)[1] | 0.59 | 0.54 |
|   Particle | (0.89) | 0.93 | 0.89 |
|   Real | (2.66) | 2.91 | 2.70 |
| Surface Area, m$^2$/g | (365) | 348 | 346 |
| Average Pore Diameter, A[2] | (92) | 84 | 87 |
| Pore Volume, cc/g | (0.748) | 0.733 | --- |
| Pore Size Distribution % of PV in Pores of | | | |
|   0-30 A[2] Diameter | (22) | 23 | 20 |
|   30-50 | (10) | 5 | 9 |
|   50-80 | (9) | 18 | 14 |
|   80-100 | (4) | 10 | 4 |
|   100-150 | (7) | 14 | 8 |
|   150-200 | (4) | 4 | 4 |
|   200-300 | (8) | 5 | 4 |
|   300+ | (36) | 21 | 37 |

[1] Numbers in parentheses are properties before steaming.
[2] A = Angstrom units; 1 Angstrom unit = $10^{-10}$m.

## Table 2

| Feedstock | Bright Stock | Heavy Neutral | Heavy Neutral |
|---|---|---|---|
| Catalyst Type | HZSM-5 of Example 1 | PdZSM-5 of Example 3 from top of Reactor | PdZSM-5 of Example 3 from bottom of Reactor |
| Residue Analysis Basis = g/100g Fresh Catalyst | | | |
| Carbon | 8.36 | 0.70 | 0.68 |
| Hydrogen | 1.02 | 0.10 | 0.11 |
| Nitrogen | 0.035 | 0.029 | 0.035 |
| Sulfur | - | - | - |
| Total, g/100g Fresh Catalyst | 9.415 | 0.829 | 0.825 |
| Normalized Composition of Residue | | | |
| Carbon, wt% | 88.79 | 84.44 | 82.42 |
| Hydrogen, wt% | 10.83 | 12.06 | 13.33 |
| Nitrogen, ppm | 3717 | 34980 | 42424 |
| H/C (Atomic) | 1.46 | 1.71 | 1.94 |

Notes:
(1)   The catalyst of Example 1 was heated to 130°C in a vacuum oven to remove n-pentane that was on catalyst from Soxhlet extraction.

Table 2 (continued)

| Feedstock | Bright Stock | Heavy Neutral and Light Neutral |
|---|---|---|
| Catalyst Type | NiZSM-5 of Example 2 | NiZSM-5 of Example 2 |
| **Residue Analysis Basis = g/100g Fresh Catalyst** | | |
| Carbon | 3.54 | 4.45 |
| Hydrogen | 0.37 | 0.48 |
| Nitrogen | 0.062 | 0.039 |
| Sulfur | 0.05 | 0.014 |
| Total, g/100g Fresh Catalyst | 4.022 | 4.983 |
| **Normalized Composition of Residue** | | |
| Carbon, wt% | 88.02 | 89.93 |
| Hydrogen, wt% | 9.20 | 9.64 |
| Nitrogen, ppm | 15415 | 7827 |
| H/C (Atomic) | 1.25 | 1.29 |

Notes:

(1) The catalyst of Example 1 was heated to 130°C in a vacuum oven to remove n-pentane that was on catalyst from Soxhlet extraction.

## Table 3

### Coke Formation on Catalysts During Catalytic Dewaxing of Heavy Neutral Feedstocks

| | | Adsorbed Oil | | Coke | |
|---|---|---|---|---|---|

#### Deoiled in He at 482°C

| Catalyst of Example | Metal | WtZ | Temp °C Max. Desorb Rate | WtZ* | Temp °C Max. Burn Rate |
|---|---|---|---|---|---|
| 7 | Pd | 36.65 | 355 | 7.53 | 458 |
| 8 | Pt | 35.32 | 350 | 7.18 | 500 |
| 9 | Ni | 34.14 | 355 | 10.30 | 540 |

#### H$_2$ Reactivation at 482°C

| | | | | | |
|---|---|---|---|---|---|
| 7 | Pd | 39.40 | 355 | 3.94 | 470 |
| 8 | Pt | 37.89 | 345 | 3.46 | 510 |
| 9 | Ni | 37.26 | 345 | 5.40 | 580 |

*Ignited Basis

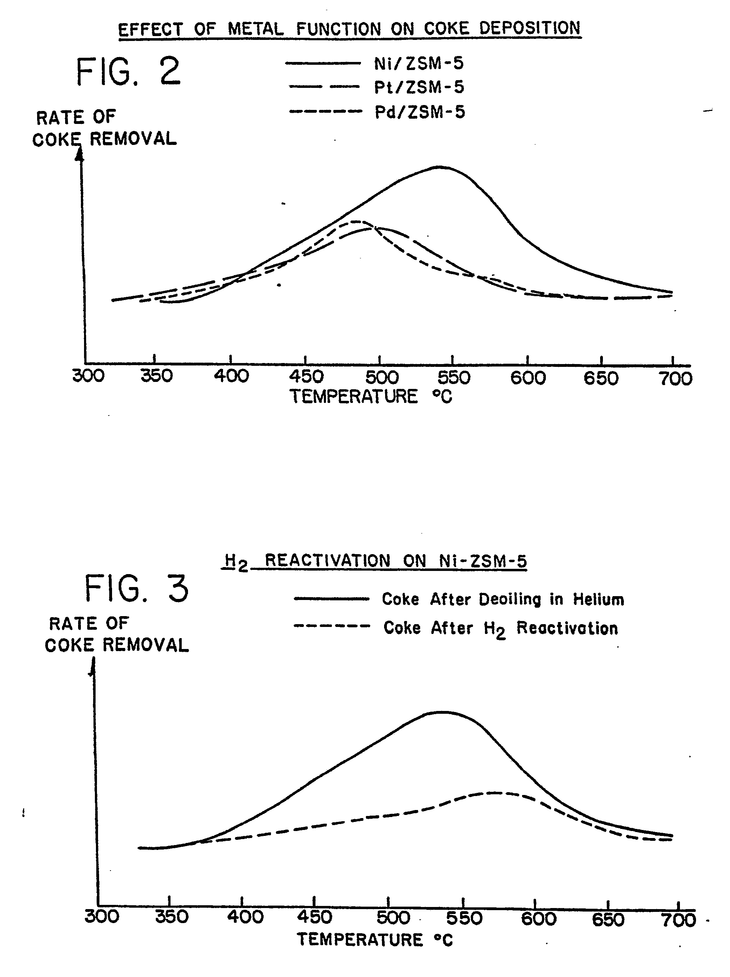

Figure 2 of the accompanying drawings shows that there is a significant difference in the temperature for maximum rate of coke removal in air. A temperature of 540°C is required for maximum rate of coke removal of the helium treated NiZSM-5 catalysts compared to 500°C for PtZSM-5 and 460°C for PdZSM-5. This would indicate that the carbonaceous material formed on noble metal catalysts, especially palladium catalysts, is easier to remove by oxygen regeneration as well as hydrogen reactivation. It is believed that the noble metal not only catalyzes the removal of carbonaceous residues formed but inhibits the formation of highly refractory carbonaceous residues, also.

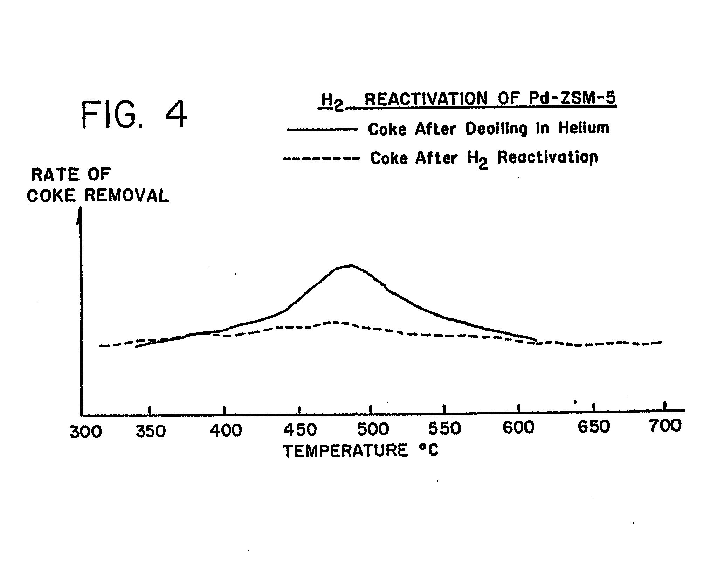

Additional samples of the coked catalysts were treated in a thermogravimetric analyser (TGA) with hydrogen for 2 hours at 480°C and 100 kPa. Comparison of the He and H$_2$ reactivation data in Table 3 indicates that an additional 50 weight percent of the coke from all three samples was removed during hydrogen reactivation. Platinum and palladium catalysts retained 3.9 and 3.5 weight percent coke respectively after hydrogen reactivation while the Ni catalyst retained 5.4 weight percent coke. As before, the temperature of maximum rate of coke removal for PdZSM-5 is about 100°C lower than that of NiZSM-5. However, as shown in Figure 3, the temperature maximum for coke removal from NiZSM-5 is shifted about 40°C higher than that observed during the helium reactivation. This suggests that only the hardest coke remained after H$_2$ reactivation. As shown in Figure 4, the temperature for maximum rate of coke removal remained about the same after the H$_2$ and helium reactivation indicating that hydrogen reactivation of the Pd catalyst produced a "softer" coke than processed by hydrogen reactivation of the Ni catalyst. Analysis of the remaining residue as shown in Table 2 substantiates this observation, since the H/C ratio of the coke after lube dewaxing over PdZSM-5 is higher than for NiZSM-5.

The Examples show that noble metal catalysts exhibit advantages over conventional nickel or non-metal dewaxing catalysts for hydrogen reactivation in that: (1) less coke remains on the Pd and Pt catalysts after reactivation at equivalent severities, (2) lower temperatures are required to remove the coke from these catalysts and (3) the coke that does remain on the Pt and Pd catalysts is a "softer" coke that should be easier to remove by going to higher temperatures.

## Claims

1. A method for hydrogen reactivating a coked dewaxing catalyst comprising a noble metal, an inorganic oxide binder and a zeolite component having a constraint index of 1 to 12 and a silica to alumina molar ratio of at least 12, which method comprises contacting the coked dewaxing catalyst with hydrogen at a hydrogen pressure less than 7000 kPa and at a temperature of 315° to 538°C.

2. A method according to Claim 1, wherein hydrogen reactivation is carried out at a hydrogen pressure of 790 to 7000 kPa.

3. A method according to Claim 2, wherein hydrogen reactivation is carried out at 315 to 482°C and a hydrogen pressure of 2170 to 3550 kPa.

4. A method according to Claim 3, wherein hydrogen reactivation is carried out at 371 to 454°C and a hydrogen pressure of 2510 to 3100 kPa.

5. A method according to any one of Claims 1 to 4, wherein reactivation is carried out until catalyst coke content is less that 10 weight percent of the catalyst.

6. A method according to Claim 5, wherein reactivation is carried out until catalyst coke content is less than 1 weight percent of the catalyst.

7. A method according to any one of Claims 1 to 6, wherein the zeolite is selected from zeolite beta, ZSM-5, ZSM-11, ZSM-5/ZSM-11 intermediate, ZSM-12, ZSM-23, ZSM-35, ZSM-38 and ZSM-48.

8. A method according to any one of Claims 1 to 7, wherein the noble metal is selected from platinum, palladium, iridium, rhodium, ruthenium and osmium.

9. A method according to any one of Claims 1 to 8, wherein the inorganic oxide binder is alumina.

10. A method for catalytically dewaxing a hydrocarbon feedstock containing straight chain paraffins, comprising the steps of:
contacting the feedstock under dewaxing conditions with a catalyst comprising less than 2 weight percent noble metal, an inorganic oxide binder and a shape selective zeolite having a constraint index of 1 to 12 and a silica-to-alumina molar ratio of at least 12, to produce an effluent stream more than 80 volume percent of which has a boiling point greater than 230°C; and
non-oxidatively reactivating the coked catalyst by a method according to any one of Claims 1 to 9.

## Patentansprüche

1. Verfahren zur Wasserstoffregeneration eines verkokten Endparaffinierungskatalysators, der ein Edelmetall, ein anorganisches Oxidbindemittel und eine Zeolithkomponente mit einem Zwangsindex von 1 bis 12 und einem Siliciumdioxid/Aluminiumoxid-Molverhältnis von mindestens 12 umfaßt, wobei dieses Verfahren den Kontakt des verkokten Endparaffinierungskatalysators mit Wasserstoff bei einem Wasserstoffdruck von weniger als 7000 kPa und einer Temperatur von 315 bis 538°C umfaßt.

2. Verfahren nach Anspruch 1, worin die Wasserstoffregeneration bei einem Wasserstoffdruck von 790 bis 7000 kPa durchgeführt wird.

3. Verfahren nach Anspruch 2, worin die Wasserstoffregeneration bei 315 bis 482°C und einem Wasserstoffdruck von 2170 bis 3550 kPa durchgeführt wird.

4. Verfahren nach Anspruch 3, worin die Wasserstoffregeneration bei 371 bis 454°C und einem Wasserstoffdruck von 2510 bis 3100 kPa durchgeführt wird.

5. Verfahren nach einem der Ansprüche 1 bis 4, worin die Regeneration durchgeführt wird, bis der Koksgehalt des Katalysators weniger als 10 Gew.-% des Katalysators beträgt.

6. Verfahren nach Anspruch 5, worin die Regeneration durchgeführt wird, bis der Koksgehalt des Katalysators weniger als 1 Gew.-% des Katalysators beträgt.

7. Verfahren nach einem der Ansprüche 1 bis 6, worin der Zeolith aus Zeolith Beta, ZSM-5, ZSM-11, einer Zwischenstufe von ZSM-5/ZSM-11, ZSM-12, ZSM-23, ZSM-35, ZSM-38 und ZSM-48 ausgewählt ist.

8. Verfahren nach einem der Ansprüche 1 bis 7, worin das Edelmetall aus Platin, Palladium, Iridium, Rhodium, Ruthenium und Osmium ausgewählt ist.

9. Verfahren nach einem der Ansprüche 1 bis 8, worin das anorganische Oxidbindemittel Aluminiumoxid ist.

10. Verfahren zur katalytischen Endparaffinierung eines Kohlenwasserstoff-Ausgangsmaterials, das geradkettige Paraffine enthält, welches die Schritte umfaßt:
Kontakt des Ausgangsmaterials unter Endparaffinierungsbedingungen mit einem Katalysator, der weniger als 2 Gew.-% Edelmetall, ein anorganisches Oxidbindemittel und einen formselektiven Zeolith mit einem Zwangsindex von 1 bis 12 und einem Siliciumdioxid/Aluminiumoxid-Molverhältnis von mindestens 12 umfaßt, um einen Abflußstrom zu erzeugen, bei dem mehr als 80 Vol.-% einen Siedepunkt von oberhalb 230°C aufweisen; und nicht oxidierende Regeneration des verkokten Katalysators durch ein Verfahren nach einem der Ansprüche 1 bis 9.

**Revendications**

1. Un procédé pour réactiver par l'hydrogène un catalyseur de déparaffinage cokéfié comprenant un métal noble, un liant de type oxyde inorganique et un composant zéolitique ayant un indice de contrainte de 1 à 12 et un rapport molaire silice à alumine d'au moins 12, caractérisé en ce qu'il comprend la mise en contact du catalyseur de déparaffinage cokéfié avec de l'hydrogène à une pression d'hydrogène inférieure à 7000 kPa et à une température de 315 à 538°C.

2. Un procédé suivant la revendication 1, caractérisé en ce que la réactivation par l'hydrogène est effectuée à une pression d'hydrogène de 790 à 7000 kPa.

3. Un procédé suivant la revendication 2, caractérisé en ce que la réactivation par l'hydrogène est effectuée entre 315°C et 482°C et à une pression d'hydrogène de 2170 à 3550 kPa.

4. Un procédé suivant la revendication 3, caractérisé en ce que la réactivation par l'hydrogène est effectuée entre 371°C et 454°C et à une pression d'hydrogène de 2510 à 3100 kPa.

5. Un procédé suivant l'une quelconque des revendications 1 à 4, caractérisé en ce que la réactivation est effectuée jusqu'à obtention d'une teneur en coke du catalyseur inférieure à 10% en poids du catalyseur.

6. Un procédé suivant la revendication 5, caractérisé en ce que la réactivation est effectuée jusqu'à obtention d'une teneur en coke du catalyseur inférieure à 1% en poids du catalyseur.

7. Un procédé suivant l'une quelconque des revendications 1 à 6, caractérisé en ce que la zéolite est choisie parmi la zéolite béta, ZSM–5, l'intermédiaire ZSM–5/ZSM–11, ZSM–11, ZSM–12, ZSM–23, ZSM–35, ZSM–38 et ZSM–48.

8. Un procédé suivant l'une quelconque des revendications 1 à 7, caractérisé en ce que le métal noble est choisi parmi le platine, le palladium, l'iridium, le rhodium, le ruthénium et l'osmium.

9. Un procédé suivant l'une quelconque des revendications 1 à 8, caractérisé en ce que le liant de type oxyde inorganique est l'alumine.

10. Procédé pour déparaffiner catalytiquement une charge d'alimentation hydrocarbonée contenant des paraffines à chaîne droite, caractérisé en ce qu'il comprend les étapes suivantes:

la mise en contact de la charge d'alimentation dans des conditions de déparaffinage avec un catalyseur comprenant moins de 2% en poids de métal noble, un liant de type oxyde inorganique et un composant zéolitique ayant un indice de contrainte de 1 à 12 et un rapport molaire silice à alumine d'au moins 12, pour produire un courant effluent dont plus de 80% en volume ont un point d'ébullition supérieur à 230°C; et la réactivation de façon non oxydante du catalyseur cokéfié selon le procédé de l'une quelconque des revendications 1 à 9.

FIG. I

EFFECT OF METAL FUNCTION ON COKE DEPOSITION

FIG. 2

Ni/ZSM-5
Pt/ZSM-5
Pd/ZSM-5

RATE OF
COKE REMOVAL

300   350   400   450   500   550   600   650   700
TEMPERATURE °C

$H_2$ REACTIVATION ON Ni-ZSM-5

FIG. 3

Coke After Deoiling in Helium
Coke After $H_2$ Reactivation

RATE OF
COKE REMOVAL

300   350   400   450   500   550   600   650   700
TEMPERATURE °C

# FIG. 4

H₂ REACTIVATION OF Pd-ZSM-5

—————— Coke After Deoiling In Helium

--------- Coke After H₂ Reactivation

RATE OF
COKE REMOVAL

TEMPERATURE °C

EP 0 209 233 B1